## Europäisches Patentamt
## European Patent Office
## Office européen des brevets

(19)

(11) Numéro de publication: **0 064 434**
**B1**

(12) # FASCICULE DE BREVET EUROPEEN

(45) Date de publication du fascicule du brevet:
**19.06.85**

(51) Int. Cl.⁴: **F 25 B 15/02**, F 25 B 29/00

(21) Numéro de dépôt: **82400648.0**

(22) Date de dépôt: **08.04.82**

(54) **Procédé de production de froid et/ou de chaleur au moyen d'un cycle à absorption.**

(30) Priorité: **15.04.81 FR 8107751**

(73) Titulaire: **INSTITUT FRANCAIS DU PETROLE, 4, Avenue de Bois-Préau, F-92506 Rueil-Malmaison Cédex (FR)**

(43) Date de publication de la demande:
**10.11.82 Bulletin 82/45**

(72) Inventeur: **Rojey, Alexandre, 29, 33, rue Henri Régnault, F-92380 Garches (FR)**

(45) Mention de la délivrance du brevet:
**19.06.85 Bulletin 85/25**

(84) Etats contractants désignés:
**AT BE CH DE GB IT LI NL SE**

(56) Documents cités:
**DE - A - 1 501 144
FR - A - 2 148 272
FR - A - 2 199 106
FR - A - 2 437 588
FR - A - 2 441 135
FR - A - 2 444 242
GB - A - 284 222
US - A - 1 822 109
US - A - 1 882 254
US - A - 1 952 214
US - A - 2 248 178
US - A - 2 638 760
US - A - 2 963 875
US - A - 3 605 873**

BUNDESDRUCKEREI BERLIN

## Description

La présente invention est relative à un nouveau procédé permettant d'améliorer les performances des cycles à absorption assurant la production de froid et/ou de chaleur à partir d'une source de chaleur.

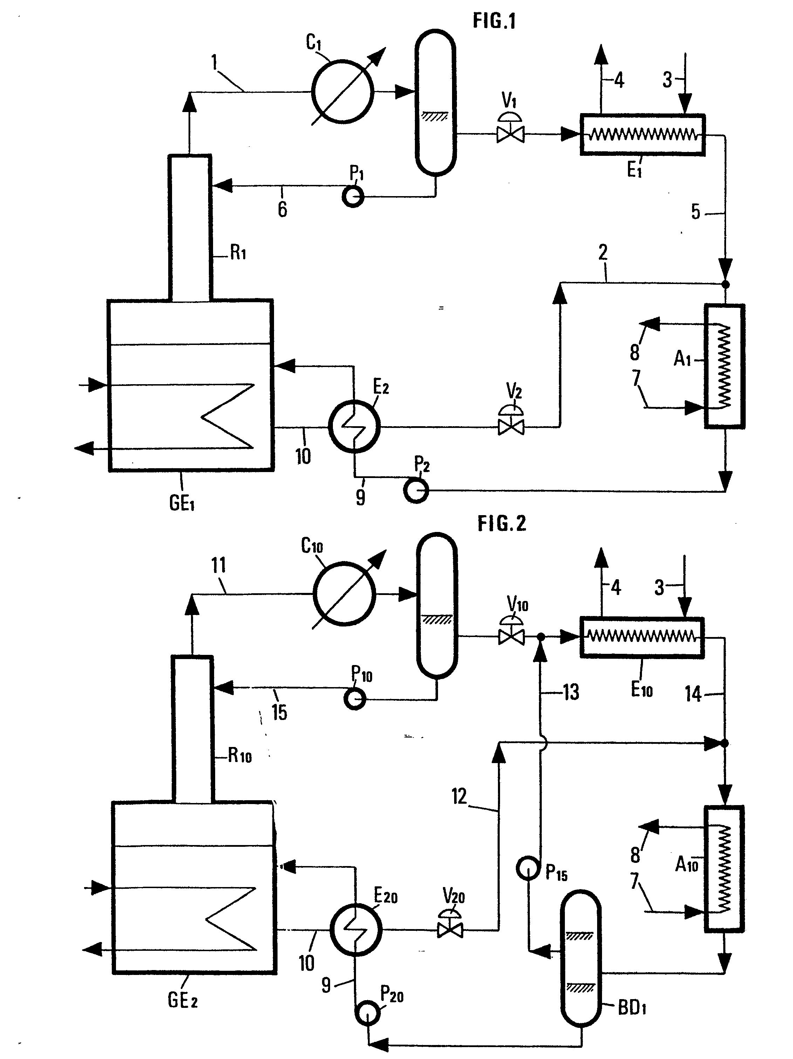

Le principe du cycle à absorption dont l'invention vise à améliorer les performances est schématisé sur la Figure 1.

Un tel cycle à absorption fait intervenir un fluide de travail (F) et un solvant (S). Le fluide (F) peut être par exemple de l'ammoniac et le solvant (S) de l'eau.

Dans le générateur GE1 une solution de (F) dans (S) est chauffée, ce qui provoque la production d'une phase vapeur riche en (F). Si une proportion trop importante de solvant (S) est entraînée dans la phase vapeur, la phase vapeur peut être rectifiée dans la zone de rectification R1. La phase vapeur ainsi rectifiée ressort par le conduit 1 et est condensée dans le condenseur C1. A la sortie du condenseur Cé une fraction de la phase liquide obtenue est renvoyée à la zone de rectification R1 au moyen de la pompe de reflux P1 (conduit 6), la fraction restante étant envoyée dans la vanne de détente V1 puis vaporisée dans l'échangeur E1 en refroidissant un fluide extérieur (circuit 3, 4). La phase vapeur ainsi obtenue (conduit 5) est absorbée par la solution pauvre provenant du générateur et arrivant par le conduit 2.

La chaleur d'absorption est transmise, dans l'absorbeur A1, à un fluide extérieur (circuit 7, 8) et la solution obtenue est reprise par la pompe P2 et envoyée par le conduit 9 dans l'échangeur E2 dans lequel elle est chauffée par échange de chaleur avec la solution pauvre provenant du générateur. La solution pauvre provenant du générateur (conduit 10) est détendue à travers la vanne V2 et envoyée par le conduit 2 à la zone d'absorption.

Une telle disposition peut être utilisée soit pour produire du froid qui est généré au niveau de l'évaporateur E1, soit pour réaliser une pompe à chaleur qui fournit de la chaleur au niveau du condenseur C1 et de l'absorbeur A1, la chaleur fournie étant égale à la somme de la chaleur consommée dans le générateur et de la chaleur pompée dans l'évaporateur.

Une technique connue destinée à éliminer les pompes de circulation P1 et P2 consiste à introduire dans le circuit ainsi défini un troisième constituant formé par un gaz permanent (G), de manière à réaliser un circuit sensiblement isobare dans lequel les fluides circulent par gravité. Dans ce cas, on obtient dans l'évaporateur une température plus basse que dans le condenseur, en raison de l'abaissement de la pression partielle du fluide (F), la pression totale de (F) et (G) à l'évaporateur étant voisine de la pression de (F) dans le condenseur C1. Ce gaz permanent peut être remplacé comme cela est décrit dans les brevets US 1 952 214 et US 1 822 109 par un fluide auxiliaire, qui est revaporisé avant envoi à l'évaporateur de manière à conserver un schéma isobare.

Le brevet US 2 248 178 décrit un système de réfrigération à absorption dans lequel on fait circuler deux fluides de réfrigération, dont un fluide principal tel que l'ammoniac et un fluide auxiliaire condensable, insoluble dans la solution du fluide principal, tel que l'isobutane, entre une zone dite de haute pression, et une zone dite de basse pression. Le débit du fluide auxiliaire dans le dispositif décrit dans ce brevet dépend de l'écart de pression entre la pression haute et la pression basse. Le fluide auxiliaire est entrainé ↳ar le fluide principal à l'aide d'un système de type »Venturi«. On réalise dans l'absorbeur de ce brevet un contact à contre-courant entre la phase vapeur issue de la zone d'évaporation et la solution pauvre issue de la zone de désorption.

Il a été découvert et c'est là l'objet de la présente invention qu'il est possible d'améliorer les performances d'un procédé de production de froid et/ou de chaleur fonctionnant au moyen d'un cycle à absorption comprenant des étapes d'évaporation, d'absorption, de désorption dans le générateur et condensation ainsi qu'éventuellement de rectification. Cette amélioration des performances est obtenue en mélangeant le fluide (F) qui est envoyé d' l'évaporateur avec un fluide (H), qui est un mélange d'au moins deux constituants, qui arrive en phase liquide, en vaporisant le mélange des fluides (F) et (H), en mélangeant la phase vapeur ainsi formée avec la solution pauvre provenant de l'étape de désorption, en refroidissant le mélange ainsi formé de manière à obtenir, par absorption du fluide (F) et par condensation du fluide (H), deux phases liquides, le fluide (H) étant au moins partiellement immiscible avec la solution du fluide (F) dans le solvant (S), en séparant les deux phases liquides obtenues et en recyclant le fluide (H) en phase liquide pour le mélanger au fluide (F) qui est envoyé à l'évaporateur, tandis que l'autre phase (solution d'absorption) est normalement envoyée au générateur, et, en contrôlant le débit du fluide (H) indépendamment de la valeur de la pression haute.

Le procédé de l'invention est illustré par les figures 2 à 8. La Figure 2 illustre un premier mode de réalisation de l'invention.

La Figure 3 illustre un mode de réalisation utilisable en cas d'emploi d'une solution concentrée d'un sel comme solvant et d'eau comme fluide de travail.

La Figure 4 illustre un mode préféré de réalisation permettant d'accroître la concentration de la solution à la sortie de la zone d'absorption.

La Figure 5 illustre un mode de réalisation permettant de limiter la valeur maximale de la pression de fonctionnement du procédé.

La Figure 6 illustre un mode particulier de réalisation permettant, lorsque le fluide (H) consiste en un mélange de deux constituants, de faire varier la composition du fluide (H) dans deux réserves distinctes par modification de la pression dans l'évaporateur.

La Figure 7 illustre un mode particulier de réalisation permettant, dans un cas analogue, de faire varier la composition du fluide (H) dans deux réserves communicantes, par apport de chaleur extérieure à l'une des réserves contenant le fluide (H).

La Figure 8 illustre un mode particulier de réalisation, dans lequel la vaporisation des fluides (F) et (H) est effectuée dans deux zones d'échange successives.

Dans le procédé de l'invention illustré par la figure 2, le fluide (F) sort en phase vapeur de la zone de rectification R10 par le conduit 11 puis est condensé dans le condenseur C10. Une fraction de la phase liquide obtenue est envoyée par le conduit 15 à l'aide de la pompe de reflux $P_{10}$ à la zone de rectification et la fraction restante est détendue à travers la vanne de détente V10 et mélangée à la phase liquide formée par le fluide (H) arrivant par le conduit 13. Le mélange des fluides (F) et (H) est vaporisé dans l'échangeur E10 en prenant de la chaleur à un fluide extérieur (lignes 3, 4) et la phase vapeur ainsi formée est envoyée par le conduit 14 vers la zone d'absorption A10. La solution pauvre provenant du générateur GE2 (conduit 10) est détendue à travers la vanne V20 et envoyée par le conduit 12 à la zone d'absorption A10.

Au cours de l'absorption du fluide (F) et de la condensation du fluide (H) dans la zone d'absorption A10, la chaleur d'absorption ainsi que la chaleur de condensation sont évacuées par un fluide extérieur (circuit 7, 8). A la sortie de la zone d'absorption, les deux phases liquides qui sont constituées, d'une part, par une solution du fluide (F) dans le solvant (S) et, d'autre part, par le fluide (H), sont séparées dans le bac de décantation BD1. La solution du fluide (F) dans le solvant (S) obtenue à la sortie du bac de décantation BD1 est envoyée au générateur GE2 par la pompe P20 par le conduit 9 à travers l'échangeur E20 dans lequel elle est chauffée par échange de chaleur avec la solution pauvre provenant du générateur GE2 (ligne 10). Dans le générateur GE2 la solution provenant de l'étape d'absorption est chauffée en produisant une phase vapeur qui est envoyée dans la zone de rectification R10 dans laquelle on sépare de la phase vapeur la majeure partie du solvant (S) entraîné dans la phase vapeur, cette rectification n'étant pas nécessaire lorsqu'il n'y a pas d'entraînement notable de solvant. La phase liquide formée par le fluide (H) est prélevée par la pompe P15 et recyclée à l'entrée de l'évaporateur E10 par la ligne 13.

En définitive le procédé comprend les étapes suivantes:

a) On met en contact, dans une étape d'absorption/condensation, une phase liquide de solvant (S) avec une phase gazeuse renfermant à la fois le fluide de travail (F) et un fluide (H), de manière à obtenir une solution du fluide (F) dans le solvant (S) et une phase liquide de fluide (H), la phase liquide de fluide (H) étant au moins en partie immiscible avec la solution du fluide (F) dans le solvant (S) et le fluide (H) étant un fluide vaporisable dans les conditions de l'étape (e) et condensable dans les conditions de l'étape (a), la chaleur d'absorption du fluide (F) dans le solvant (S) et la chaleur de condensation du fluide (H) étant transmises à un fluide extérieur,

b) On sépare la solution de fluide (F) dans le solvant (S) de la phase liquide de fluide (H),

c) On envoie la solution du fluide (F) dans le solvant (S), provenant de l'étape (b) à une étape de désorption et l'on soumet ladite solution à des conditions de désorption, la chaleur de désorption étant fournie par un fluide extérieur, de manière à obtenir une phase liquide appauvrie en fluide (F) et une phase vapeur riche en fluide (F), et on recycle ladite phase liquide appauvrie en fluide (F) à l'étape d'absorption/condensation (a) pour former la phase liquide de solvant (S),

d) On condense une partie au moins de la phase vapeur riche en fluide (F), provenant de l'étape de désorption (c), en fournissant de la chaleur à un fluide extérieur, pour obtenir une phase liquide de condensation,

e) On mélange au moins une partie de la phase liquide de condensation, obtenue à l'étape (d), avec au moins une partie de la phase liquide du fluide (H), provenant de l'étape (b), et on vaporise une partie au moins de mélange ainsi obtenu en prélevant de la chaleur sur un fluide extérieur, les conditions opératoires étant choisies de manière à permettre la vaporisation d'une partie au moins du fluide (F) et d'une partie au moins du fluide (H), et

f) on recycle la phase gazeuse ainsi obtenue à l'étape (a),

ledit procédé étant caractérisé en ce que le fluide (H) est un mélange d'au moins deux constituants de volatilité différente, dont les températures d'ébullition diffèrent d'au moins 10°C, ledit fluide (H) étant sélectionné de manière à ce que la variation maximale de sa tension de vapeur soit comprise entre 40 et 80% de la tension de vapeur minimale du fluide (F) et le rapport du débit molaire de fluide (H) au débit molaire de fluide (F) étant fixé à une valeur comprise entre 80% et 150% de la valeur du rapport de la tension de vapeur du fluide (H) à la sortie de l'étape de vaporisation (a) sur la tension de vapeur du fluide (F) à l'entrée de l'étape de vaporisation, lesdits débits molaires de fluide (H) et de fluide (F) étant déterminés à l'entrée de l'étape de vaporisation.

On observe que dans le procédé schématisé sur la Figure 2, la quantité de chaleur qu'il est nécessaire de dépenser dans le générateur GE2 par unité de masse de fluide (F) vaporisé dans l'évaporateur E10 est voisine de la quantité de chaleur qu'il est nécessaire de dépenser dans le générateur GE1 par unité de masse de fluide (F) vaporisé dans l'évaporateur E1. Par contre, pour une unité de masse de fluide (F), on produit à l'évaporateur, dans le cas du procédé connu, schématisé sur la Figure 1, uniquement la quantité de froid correspondant à la vaporisation du fluide (F) tandis que dans le cas du procédé, selon l'invention, schématisé sur la Figure 2, on produit en plus la quantité de froid correspondant à la vaporisation du fluide (H).

Si l'on désigne par $F_1$ la chaleur de vaporisation du fluide (F) mise en jeu dans l'évaporateur E10 et par $F_2$ la chaleur de vaporisation du fluide (H), on appellera par la suite facteur de gain le rapport $(F_1+F_2)/F_1$. Ce facteur de gain augmente avec la proportion de fluide (H) vaporisé dans l'évaporateur E.

Le fluide (H) doit répondre à deux conditions principales:

1.   Il doit être au moins partiellement immiscible avec la solution de (F) dans (S), la condensation de (H) et l'absorption de (F) dans (S) devant conduire à la formation de deux phases liquides immiscibles.
2.   Il doit posséder une tension de vapeur, à la température de sortie de la zone d'absorption, inférieure à la pression totale résultant dans l'évaporateur de la vaporisation du mélange des fluides (F) et (H), de maniere à pouvoir être condensé en présence d'une solution du fluide (F) dans le solvant (S).

Pour que la première condition soit respectée, il suffit en général que le fluide (H) soit partiellement immiscible avec l'un ou l'autre des fluides (F) et (S). Ainsi par exemple, si l'eau constitue l'un des fluides (F) ou (S), de nombreux fluides organiques immiscibles ou peu miscibles avec l'eau pourront être utilisés, sous réserve de respecter également la deuxième condition définissant le fluide (H).

Cette deuxième condition impose de choisir un fluide (H) de volatilité comparable à celle du fluide (F), le rapport de la tension de vapeur du fluide (H) à la tension de vapeur du fluide (F) étant comprise au niveau de l'évaporateur, par exemple entre 0,1 : 1 et 3 : 1.

Ainsi, par exemple, si l'eau constitue le fluide (F) et une solution concentrée de bromure de lithium le solvant (S), le fluide (H) pourra contenir, par exemple un pentane.

Suivant un autre exemple, si l'ammoniac constitue le fluide (F) et l'eau le solvant (S), le fluide (H) pourra contenir, par exemple, un hydrocarbure halogéné tel que par exemple le chlorodifluorométhane (R-22), le dichlorotétrafluoroéthane (R-114).

Plus généralement, un essai préalable simple permettra de déterminer si un mélange particulier de fluides et solvant du système répond aux conditions de l'invention; on verifiera que le fluide (H) à l'état liquide est au moins en partie immiscible avec la solution du fluide (F) dans le solvant (S), le fluide (H) étant vaporisable dans les conditions de l'étape (e) et condensable dans les conditions de l'étape (a).

Le choix du fluide (H) optimal dépend, pour une application donnée, des températures de fonctionnement.

En particulier, la deuxième condition définissant le fluide (H) impose que la variation de tension de vapeur du fluide (H) entre la température fixée à l'évaporateur et la température fixée à l'absorbeur soit inférieure à la tension de vapeur du fluide (F) à la température fixée à l'évaporateur.

On a vérifié ainsi qu'il est important d'observer une règle de sélection du fluide (H) pour des conditions de fonctionnement données en vue d'obtenir le facteur de gain maximum tout en assurant un fonctionnement satisfaisant du procédé.

Cette règle peut être énoncée de la manière suivante:

La variation maximale de tension de vapeur du fluide (H) doit être comprise entre 40 et 80% de la tension de vapeur minimale du fluide (F), celle-ci étant en général celle qui prévaut à l'entrée de l'évaporateur.

La variation maximale de tension de vapeur du fluide (H) correspond à sa variation entre le point du circuit suivi par le fluide (H) pour lequel la température est minimum, c'est-à-dire en général la température correspondant au début de "étape de vaporisation, et le point du circuit suivi par le fluide (H) pour lequel la température est maximum, c'est-à-dire en général la température correspondant au début de l'étape d'absorption (a). D'autre part, cette règle est à appliquer pour les conditions opératoires qui conduisent effectivement à l'écart maximum de tension de vapeur du fluide (H), c'est-à-dire dans les conditions qui correspondent à l'écart maximum entre les températures extrêmes rencontrées au cours du circuit suivi par le fluide (H).

De cette manière, on a pu constater que l'on assure les conditions qui permettent de réaliser efficacement l'absorption du fluide (F) au cours de l'étape (a) tout en obtenant le facteur de gain le plus élevé.

On a constaté d'autre part que pour obtenir la facteur de gain le plus élévé, il est important de régler correctement le débit du fluide (H). On observe en effet que le facteur de gain passe par un maximum lorsque le débit de fluide (H) augmente.

En désignant par F la puissance frigorifique produite au cours de l'étape de vaporisation (a) et par $\alpha$ le rapport du débit molaire de fluide (H) sur le débit molaire de fluide (F), on constate que la puissance frigorifique F rapportée à la puissance frigorifique Fo correspondant à un débit molaire nul de fluide (H) évolue en fonction de $\alpha$.

On constate ainsi que l'installation opère dans des conditions parfaitement normales dans une gamme très large de valeurs du débit de fluide (H), y compris pour des valeurs très faibles ou même nulles de ce débit mais que la valeur maximum du facteur de gain correspond à un rapport du débit molaire de fluide (H) au débit molaire de fluide (F) sensiblement égal au rapport des tensions de vapeur des fluides (H) et (F) à la température de la zone d'évaporation. (On notera que les débits molaires des fluides (H) et (F) sont ceux que l'on peut déterminer à l'entrée de l'évaporateur.) On a constaté d'autre part que si la température à la sortie de l'étape d'évaporation est plus élevée qu'à l'entrée, il est possible d'augmenter le débit de fluide (H) et que, de manière générale, pour opérer dans les conditions optimales, le rapport du débit molaire de fluide (H) sur le débit molaire de fluide (F) doit être au moins égal l'à 80% du rapport de la tension de vapeur du fluide (H) à la sortie de l'étape de vaporisation (a) sur la tension de vapeur du fluide (F) à l'entrée de l'étape de vaporisation et de préférence compris entre 80 et 150% de ce rapport.

Etant donné que, dans le procédé selon l'invention, le fluide (H) optimal est caractérisé par une tension de vapeur qui, à la température de l'évaporateur, doit être d'autant plus élevée que la différence $\Delta T$ entre la température dans l'absorbeur et la température dans l'évaporateur est réduite, on observe que la pression totale dans les zones d'évaporation et d'absorption est en général inférieure à la pression totale dans les zones de condensation et de désorption lorsque la différence de température $\Delta T$ est relativement élevée et supérieure à la pression totale dans les zones de condensation et de désorption lorsque la différence de température $\Delta T$ est relativement faible, par exemple inférieure à 30°C. Dans ce dernier cas, les vannes de détente V10 et V20 doivent être remplacées par des pompes de circulation et la pompe de circulation P20 doit être remplacée par une vanne de détente. Dans les cas intermédiaires, le processus se rapproche d'un processus isobare, ce qui peut permettre éventuellement de supprimer la pompe de circulation P20 et de réaliser une circulation par gravité.

Le fluide (H) est constitué par un mélange de deux ou plusieurs constituants. La tension de vapeur du mélange peut donc être ajustée en jouant sur la composition du mélange et ceci représente un moyen pour se placer constamment dans des conditions optimales, même si les conditions de fonctionnement et en particulier la différence de température $\Delta T$ varient.

Toutes les méthodes connues pour faire varier la composition d'un mélange peuvent être utilisées dans ce cas. La méthode la plus simple consiste à placer dans le circuit de parcours du fluide (H) deux réserves de fluide (H) en phase liquide dont les conditions de température et de pression peuvent être adaptées différemment de manière à obtenir des compositions différentes et variables de ces deux réserves.

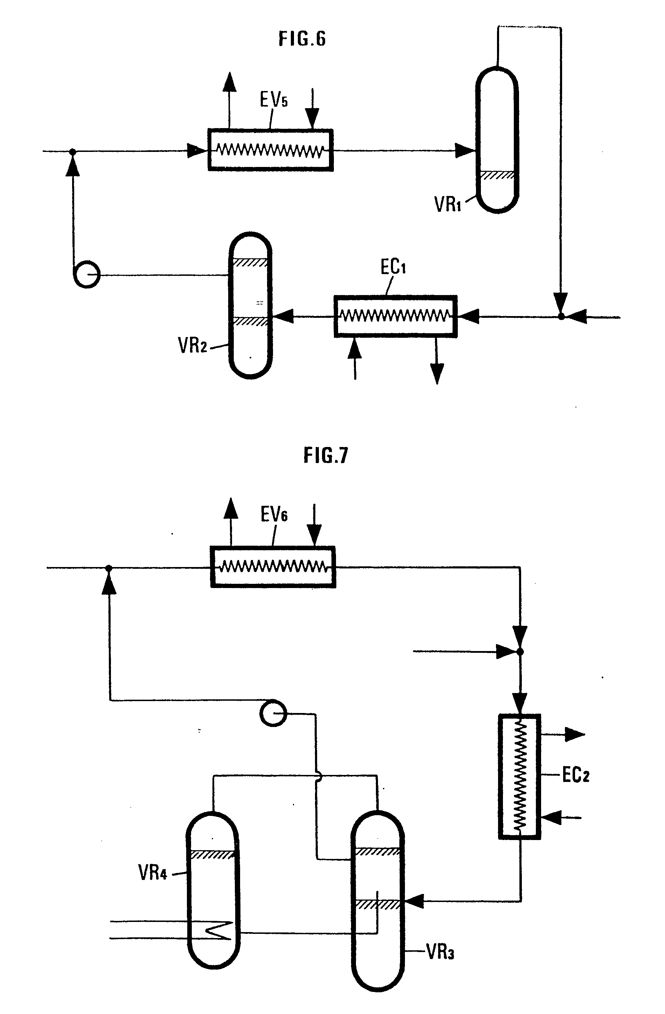

On peut par exemple opérer dans les conditions décrites par la figure 6. A la sortie de l'évaporateur EV5 on recueille une fraction liquide non vaporisée dans la réserve de liquide VR1, la phase vapeur passe dans l'échangeur EC1 condensé et de solution de fluide (F) dans le solvant (S) étant recueilli dans la réserve de liquide VR2. Lorsque l'on augmente la pression régnant dans l'évaporateur on réduit la fraction de fluide (H) vaporisée dans l'évaporateur EV5. La composition de la phase vapeur est alors plus riche en constituant léger et le mélange s'enrichit progressivement en constituant léger jusqu'à une proportion telle qu'il soit entièrement vaporisé à la sortie de l'évaporateur. Pour augmenter la proportion de constituant lourd dans le mélange, on opère en sens inverse en diminuant la pression régnant dans l'évaporateur.

On peut également opérer dans les conditions de la figure 7.

A la sortie de l'évaporateur EV6 la phase vapeur passe dans l'échangeur EC2, le mélange de fluide (H) condensé et de solution de fluide (F) dans le solvant (S) est recueilli dans un volume de réserve VR3. La phase liquide (H) placée dans le volume de réserve VR3 communique avec une deuxième réserve VR4 de phase liquide (H). La température de la deuxième réserve VR4 peut être réglée indépendamment de la première réserve VR3 par une résistance liquide et en augmentant l'écart entre la température à l'intérieur de la réserve VR4 et la température à l'intérieur de la réserve VR3, on enrichit la composition de la phase liquide de la réserve VR4 en constituant lourd et la composition de la phase liquide de la réserve VR3 en constituant léger.

Pour l'application des règles générales de sélection du fluide (H) et de réglage du débit de fluide (H) qui ont été énoncées les tensions de vapeur à considérer représentent les pressions de phase vapeur du mélange en équilibre avec la phase liquide.

Pour qu'une variation de la composition du mélange puisse conduire à une optimisation des conditions de fonctionnement, il faut que le mélange comporte deux constituants dont les températures d'ébullition diffèrent d'au moins 10°C.

Comme exemples de mélanges on peut considérer des mélanges de deux ou plusieurs constituants tels que:

> propane + butane
> butane + pentane
> propane + butane + pentane
> R-22 + R-114

Le procédé est illustré par l'exemple 3.

### Exemple 1
### (Comparatif)

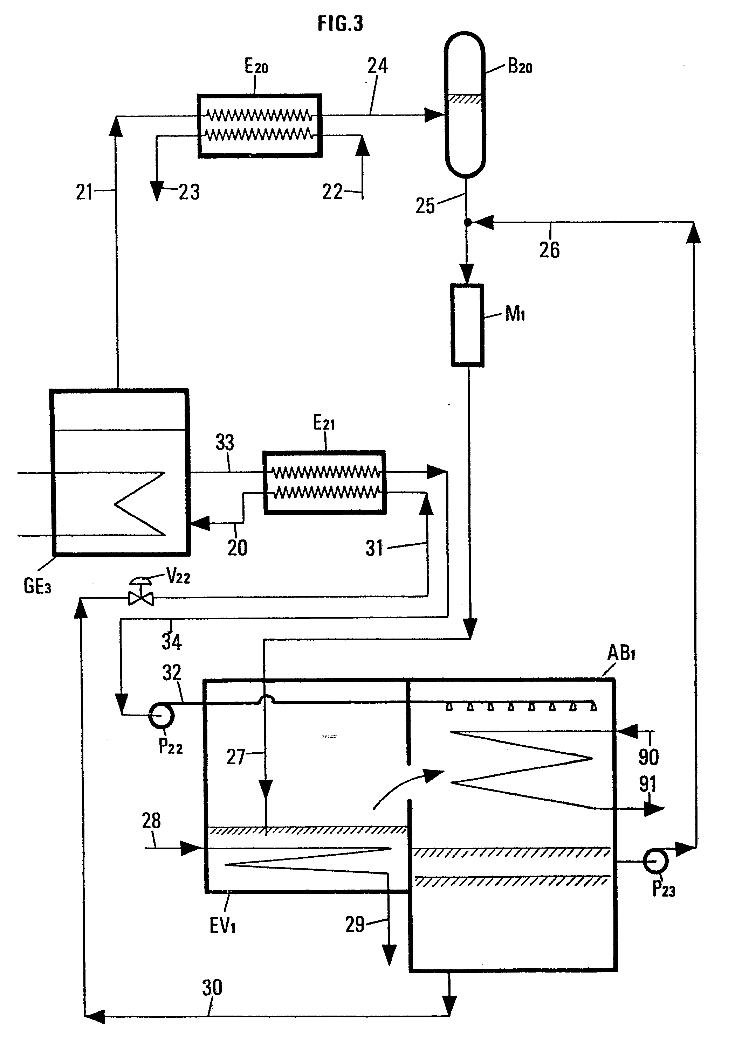

L'exemple 1 est décrit en référence au schéma de la Figure 3. Dans cet exemple le fluide (F) est de l'eau et le solvant (S), une solution concentrée de bromure de lithium.

On fait arriver par le conduit 20 dans le générateur GE3 24 Kg/h de solution de bromure de lithium contenant 39% en poids d'eau. Cette solution est chauffée dans le générateur GE3 à une température de 155°C. La vapeur d'eau ainsi formée, qui représente un débit de 2,5 Kg/h, est évacuée par le conduit 21 et condensée à la température de 84°C dans l'échangeur E20 en chauffant un fluide extérieur qui arrive par le conduit 22 et repart par le conduit 23. L'eau qui sort condensée de l'échangeur E20 par le conduit 24 est recueillie dans le ballon B20 d'où elle descend par gravité vers la zone d'évaporation EV1 par le conduit 25. Elle est mélangée en ligne avec 18 Kg/h d'heptane normal en phase liquide qui arrive par le conduit 26 passe dans le mélangeur statique M1d'où le mélange des deux phases ressort sous forme d'émulsion qui est envoyée par le conduit 27 dans la zone d'évaporation EV1. Le mélange d'eau et d'heptane, formant un hétéroazéotrope, est évaporé à une température de 70°C en étant chauffé par un fluide extérieur qui arrive par le conduit 23 et repart par le conduit 29. La vapeur d'eau et d'heptane ainsi formée est envoyée dans la zone d'absorption AB1. Dans cette zone la vapeur est absorbée par la solution pauvre arrivant par le conduit 32. Cette solution arrose des tubes qui sont refroidis par un fluide extérieur qui arrive par le conduit 90 et repart par le conduit 91. Cette étape d'absorption s'effectue comme l'étape de condensation à une température d'environ 82°C. On recueille ainsi deux phases liquides qui sont formées respectivement par la solution de bromure de lithium contenant 39% d'eau et l'heptane qui est évacué par la pompe P23 et recyclé par le conduit 26.

La solution de bromure de lithium (conduite 30) est détendue à travers la vanne V22 et envoyée par le conduit 31 dans l'échangeur E21 dans lequel elle est réchauffée par échange de chaleur avec la solution concentrée en bromure de lithium qui sort du générateur GE3 par la conduite 33, à la température de 155°C, puis ressort de l'échangeur E21 par le conduit 34 à une température de 90°C. Elle est alors envoyée par la pompe P22 vers la zone d'absorption.

Dans cet exemple, la vaporisation de l'eau produit, dans la zone d'évaporation, environ 5652 KJ/h et la vaporisation de l'heptane environ 5493 KJ/h. Le facteur de gain ainsi obtenu est de l'ordre de 2.

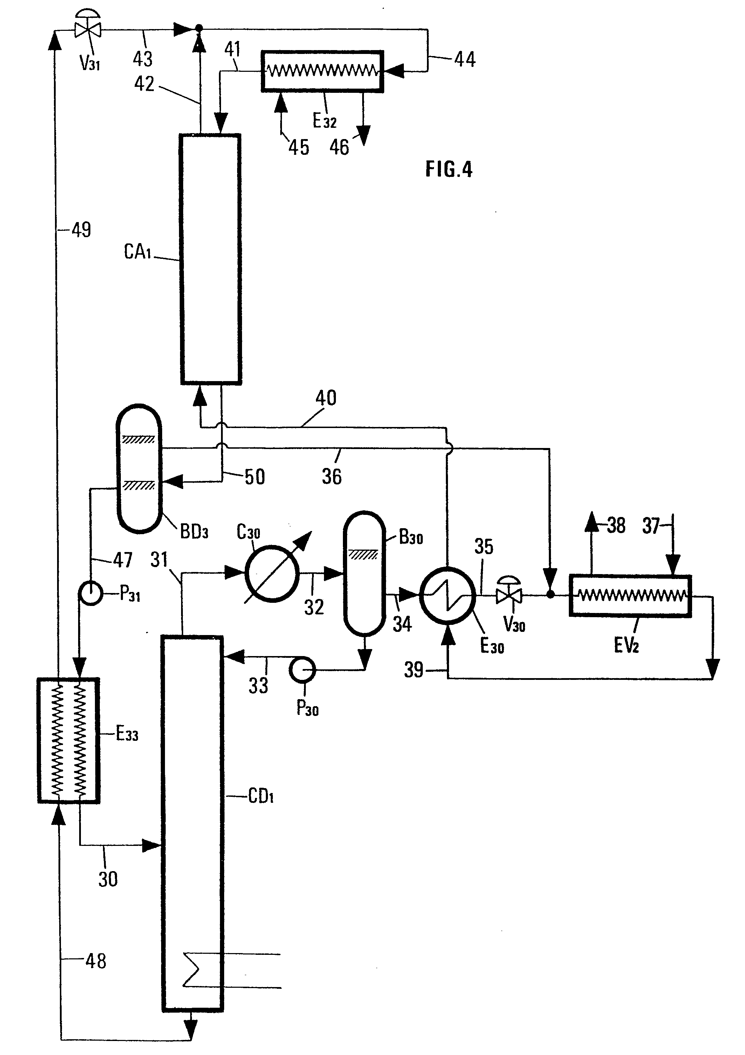

Il est possible d'améliorer encore les performances du procédé et de réduire le taux de recirculation entre le générateur et l'absorbeur en réalisant un contact à contre-courant entre la phase vapeur issue de la zone d'évaporation et la solution pauvre issue de la zone de désorption en opérant dans des conditions sensiblement adiabatiques. Dans ce cas, on sort en tête une phase vapeur qui est mélangée à la solution désorbée et le mélange résultant passe dans un échangeur (échangeur E32 de la figure 4) où il subit un refroidissement permettant d'obtenir un mélange liquide formé par une solution de (F) dans (S) et par une phase (H) condensée, qui est renvoyé à la colonne de contact à contre-courant en formant une partie au moins du mélange liquide d'absorption. Dans ce cas, la chaleur dégagée par l'absorption du fluide (F) dans le solvant (S) provoque la vaporisation d'une partie du fluide (H), la fraction ainsi vaporisée se retrouvant en tête de la colonne. La chaleur d'absorption/condensation est ainsi recueillie à l'extérieur de la colonne dans l'échangeur E32.

La zone d'absorption opère ainsi dans des conditions particulières qui sont spécialement avantageuses pour le procédé selon l'invention lorsque le solvant (S) est partiellement volatil comme c'est le cas en particulier lorsque le solvant (S) est de l'eau, le fluide (F) étant de l'ammoniac. En effet, dans la zone d'absorption s'opère un échange de chaleur et de matière à contre courant entre la phase vapeur issue de l'étape de vaporisation et deux phases liquides, dont l'une (L1) est constituée par le fluide (H) et l'autre (L2) par la solution de fluide (F) dans le solvant (S). On observe en fond de colonne une température plus basse qu'en tête. Il en résulte un accroissement de la concentration de fluide (F) dans le solvant (S) en fond de colonne, d'une part en raison de l'abaissement de température entre tête et fond et d'autre part, en raison d'un accroissement de la pression partielle de fluide (F) liée à une diminution de la tension de vapeur du fluide (H). Les conditions particulières de fonctionnement de la colonne d'absorption avec circulation de deux phases liquides imposent une zone de contact adaptée à ces conditions qui peut être constituée par exemple par un garnissage suffisamment poreux pour permettre le ruissellement des deux phases liquides.

Par ailleurs, il est important de réaliser dans la zone de désorption une séparation aussi poussée que possible du fluide (F). Dans le cas d'une solution de bromure de lithium, on ne peut aller au-dessous d'une concentration minimale en eau au-dessous de laquelle apparaît une cristallisation du bromure de lithium. Lorsque ce risque de cristallisation n'existe pas, par exemple lorsque le fluide (F) est de l'ammoniac et le solvant (S) de l'eau, il est avantageux d'arriver à une concentration très faible de (F) dans (S) à la sortie de la zone de désorption, par exemple inférieure à quelques %.

Le schéma représente sur la Figure 4 illustre la manière dont peut être réalisé le procédé lorsqu'il comporte une étape d'absorption faisant intervenir un contact à contre-courant entre la phase vapeur issue de la zone d'évaporation et la phase liquide issue de la zone de désorption.

La solution concentrée de (F) dans (S) est envoyée par le conduit 30 à la zone de désorption CD1.

La vapeur, formée essentiellement par le fluide (F), est évacuée en tête par le conduit 31. Elle est condensée dans le condenseur C30 et envoyée par le conduit 32 dans le bac de réserve B30. Une fraction de la phase liquide ainsi obtenue est envoyée par la pompe P30 et le conduit 33 à la zone de désorption CD1 dans laquelle elle est utilisée comme reflux pour éliminer le solvant entraîné dans la phase vapeur. De même l'introduction de solution, qui arrive par le conduit 30, en un point intermédiaire de la zone de désorption, permet de limiter la quantité de solvant entraînée dans la phase vapeur. Lorsque l'entraînement de phase solvant est limité ou presque nul comme dans le cas du couple eau-bromure de lithium, la désorption peut être réalisée dans un simple générateur de vapeur tel que celui qui a été schématisé sur la Figure 3.

La fraction de phase liquide provenant de la condensation du fluide (F) dans le condenseur C30 et qui n'est pas utilisée à titre de reflux est envoyée par le conduit 34 dans l'échangeur E30, d'où elle ressort par le conduit 35, puis est détendue dans la vanne de détente V30. Elle est alors mélangée avec une phase liquide formée par le fluide (H) arrivant par le conduit 36. Le mélange des deux phases liquides immiscibles est envoyé dans l'évaporateur EV2 dans lequel il se vaporise en prélevant de la chaleur sur un fluide extérieur qui arrive par le conduit 37 et repart par le conduit 38. La phase vapeur ainsi obtenue est envoyée par le conduit 39 dans l'échangeur E30, d'où elle ressort par le conduit 40. L'échangeur E30, en assurant un prérefroidissement de la phase liquide condensée formée par le fluide (F), est destiné à augmenter la production de froid dans l'évaporateur EV2 mais n'est pas indispensable au fonctionnement du procédé. La phase vapeur sortant de l'échangeur E30 est envoyée par le conduit 40 à la zone d'absorption CA1, dans laquelle elle est mise en contact à contre-courant avec le mélange des deux phases liquides formées respectivement par une solution de (F) dans (S) et par le fluide (H) arrivant par le conduit 41. On obtient ainsi en tête une phase vapeur formée par un mélange des fluides (H), (F) et (S). Cette phase vapeur sortant par le conduit 42 est mélangée avec la solution pauvre arrivant par le conduit 43. Le mélange liquide-vapeur ainsi obtenu est envoyé par le conduit 44 dans l'échangeur E32 dans lequel il est condensé en fournissant de la chaleur à un fluide extérieur qui arrive par le conduit 45 et repart par le conduit 46. A la sortie de la zone d'absorption, on recueille par le conduit 50 un mélange de deux phases liquides qui sont séparées dans le bac de décantation BD3: une phase liquide formée par le fluide H ($L_1$), qui est envoyée par le conduit 36 à l'entrée de l'évaporateur EV2, et une solution concentrée ($L_2$) de (F) dans (S) qui est évacuée par le conduit 47 et envoyée par la pompe P31 dans l'échangeur E33 d'où elle ressort par le conduit 30. La solution pauvre obtenue à la sortie de la zone de désorption est évacuée par le conduit 48, passe dans l'échangeur E33, d'où elle ressort, refroidie, par le conduit 49, est détendue à travers la vanne de détente V31 et envoyée dans le conduit 43.

L'exemple 2 illustre le fonctionnement du procédé dans ce cas.

### Exemple 2
### (comparatif)

Dans cet exemple, le fluide (F) est l'ammoniac et le solvant (S) l'eau.

Par le conduit 30 (Figure 4), on envoie à la zone de désorption CD1 un débit représentant 21 Kg/h de solution contenant 41% en poids d'ammoniac.

La zone de désorption est formée par une colonne verticale comprenant deux garnissages métalliques dont l'un est place au-dessus du point d'introduction de la solution et l'autre en dessous. La pression en fond de colonne est de 14 atm et la température de 195°. En fond de colonne en fournit une puissance thermique de 27 913 KJ/h. Par le conduit 48 on évacue une phase aqueuse contenant moins de 1% en poids d'ammoniac. En tête de la colonne on évacue par le conduit 31 une phase vapeur contenant plus de 99% en poids d'ammoniac. Cette phase vapeur est condensée en fournissant 18 087 KJ/h à l'eau de refroidissement qui circule dans le condenseur C30 et ressort à une température de 34°C. La phase liquide ainsi obtenue est recueillie dans le bac de réserve B30. Par la pompe P30 on envoie à titre de reflux 1,8 Kg/h de cette phase liquide et par le conduit 34 on recueille la fraction restante qui passe dans l'échangeur E30, puis est détendue à travers la vanne de détente V30 jusqu'à une pression de $5,0 \times 10^5$ Pa. Le mélange liquide-vapeur d'ammoniac résultant est mélangé avec un débit représentant 13 Kg/h d'isobutane arrivant par le conduit 36. Le mélange d'ammoniac et d'isobutane se vaporise à une température de −5°C en prélevant 22 249 KJ/h sur le fluide extérieur qui arrive par le conduit 37 et repart par le conduit 38. La vaporisation de l'ammoniac seul prélèverait 17 296 KJ/h et le facteur de gain est donc de 1,29 dans ce cas.

La phase vapeur résultant de la vaporisation du mélange d'ammoniac et d'isobutane est évacuée par le conduit 39. Ce mélange vapeur passe alors dans l'échangeur E30 d'où il ressort à une température de 29°C. Il est alors envoyé dans la zone d'absorption CA1 formée par une colonne verticale comportant un garnissage métallique. La vapeur sortant en tête par le conduit 42 est mélangée avec la solution pauvre arrivant par le conduit 43 et le mélange liquide-vapeur ainsi obtenu est envoyé dans l'échangeur E32. La chaleur de condensation de l'isobutane et la chaleur d'absorption de l'ammoniac dans l'eau représentent une puissance thermique de 32 071 KJ/h qui est évacuée par le fluide extérieur arrivant par le conduit 45 et repartant par le conduit 46. Le mélange des deux fluides sortant à 30°C est envoyé en tête de la colonne d'absorption CA1. En fond de colonne on recueille un mélange de deux phases liquides. La solution riche d'ammoniac dans l'eau est évacuée par le conduit 47 et envoyée par la pompe P31 dans l'échangeur E33 et la phase hydrocarbure est envoyée par le conduit 36 à l'entrée de l'évaporateur EV2.

Le procédé selon l'invention est particulièrement avantageux lorsque la chaleur prélevée dans l'évaporateur EV2 est prélevée sur un intervalle de température.

En effet, dans ce cas, lorsqu'il y a entraînement de solvant dans la phase vapeur qui est générée au cours de l'étape de désorption, il est possible de réaliser une rectification moins poussée de la phase vapeur recueillie en tête de la zone de désorption. En effet, si l'on considère par exemple de l'ammoniac comme fluide (F) et de l'eau comme solvant (S), la présence d'une proportion même très faible d'eau conduit à une température de fin de vaporisation élevée incompatible avec de nombreuses applications. La présence du fluide (H) conduit à une réduction de la pression partielle d'eau et d'ammoniac lorsque la température augmente et donc à un intervalle de vaporisation du mélange d'eau et d'ammoniac plus étroit. On peut ainsi réduire le taux de reflux et même dans certains cas supprimer la rectification.

Dans tous les cas où la vaporisation du mélange des fluides (F) et (H) dans l'évaporateur EV2 s'effectue sur un intervalle de température, il est avantageux de réaliser l'échange de chaleur avec le fluide extérieur dans des conditions aussi proches que possible du mode d'échange à contre-courant.

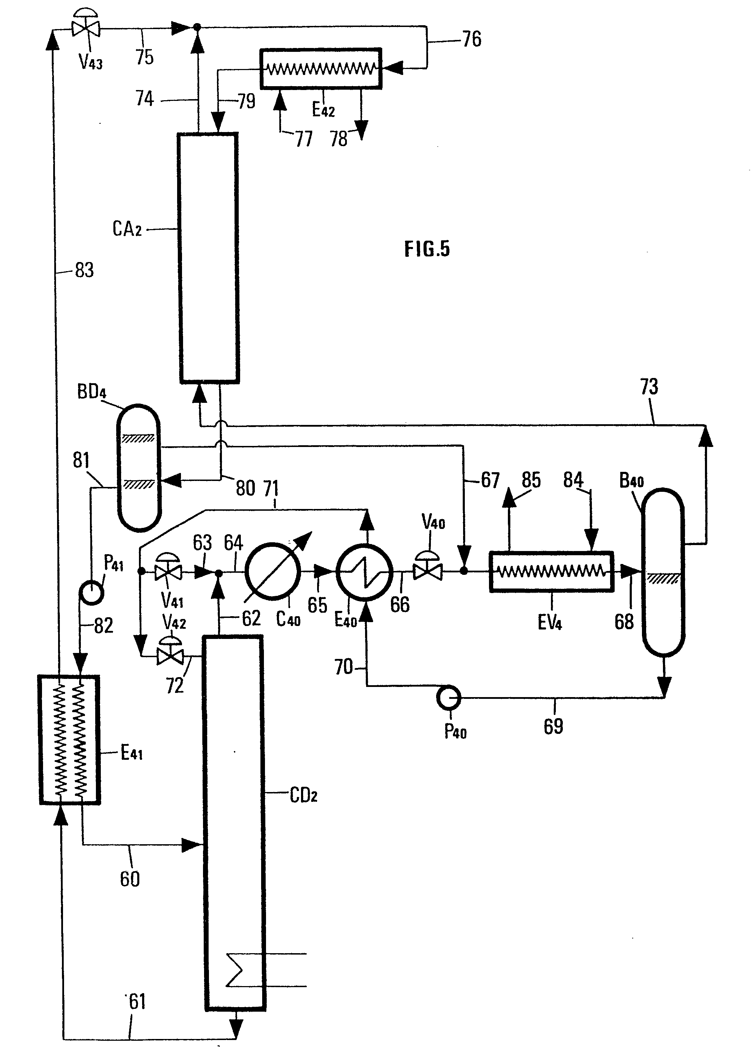

Un autre agencement possible consiste à opérer selon le schéma représenté sur la Figure 5.

La solution riche arrivant par le conduit 60 est séparée en une solution pauvre en fluide (F) qui est évacuée en fond par le conduit 61 et une phase vapeur riche en fluide (F) qui est évacuée par le conduit 62 et mélangée avec une phase au moins en partie liquide formée par un mélange du fluide (F) et de solvant (S) arrivant par le conduit 63. Le mélange ainsi obtenu est envoyé par le conduit 64 dans le condenseur C40 d'où il ressort par le conduit 65 en phase liquide sous forme de solution de (F) dans (S). Cette solution passe dans l'échangeur E40, ressort par le conduit 66, est détendue à travers la vanne de détente V40 puis est mélangée avec une phase liquide formée par le fluide (H) et arrivant par le conduit 67. Le mélange ainsi obtenu est vaporisé dans l'évaporateur EV4 dans lequel il prélève de la chaleur sur un fluide extérieur qui arrive par le conduit 84 et repart par le conduit 85. A la sortie de l'évaporateur EV4, on recueille en phase liquide une solution de fluide (F) dans le solvant (S) qui est évacuée par le conduit 68 et collectée dans le ballon B40. Cette solution est envoyée par le conduit 69 et la pompe P40 à travers le conduit 70 dans l'échangeur E40 d'où elle ressort par le conduit 71. Elle est alors séparée en deux fractions dont l'une est détendue à travers la vanne V41 et envoyée par le conduit 63 à l'entrée du condenseur C40 et l'autre est détendue à travers la vanne V42 et envoyée par le conduit 72 en tête de la zone de désorption CD2 selon une disposition prévue dans le brevet européen N° EP 34 533. La phase vapeur, recueillie dans le ballon de séparation B40 est recueillie par le conduit 73 et envoyée à la zone d'absorption CA2. La vapeur recueillie en tête de la zone d'absorption CA2 (conduit 74) est mélangée avec la solution pauvre arrivant par le conduit 75 et le mélange liquide-vapeur ainsi obtenu est envoyé par le conduit 76 dans l'échangeur E42. Dans l'échangeur E42 la chaleur de condensation du fluide (H) et la chaleur d'absorption du fluide (F) sont transmises à un fluide extérieur qui arrive par le conduit 77 et repart par le conduit 78. Le mélange des deux phases liquides ainsi obtenues est envoyé par le conduit 79 à la zone d'absorption CA2. A la sortie de la zone d'absorption CA2 on recueille par le conduit 80 deux phases liquides formées, d'une part, par une solution riche de (F) dans (S) et, d'autre part, une phase formée par le fluide (H). Ces deux phases liquides sont séparées dans le ballon de décantation BD4. La phase liquide formée par le fluide (H) est envoyée par le conduit (67) à l'entrée de l'évaporateur EV4. La solution de (F) dans (S) est évacuée par le conduit 81 et envoyée par la pompe P41 à travers le conduit 82 dans l'échangeur E41, d'où elle ressort par le conduit 60. Dans l'échangeur E41 elle échange de la chaleur avec la solution pauvre qui arrive par le conduit 61 et repart par le conduit 83 pour être envoyée à la vanne V43.

<center>Exemple 3<br>(selon l'invention)</center>

Cet exemple est illustré par la Figure 5.

A la sortie du condenseur C40 on obtient une solution contenant 70% en poids de $NH_3$. Cette solution sort du condenseur C40 à la température de 40°C et au voisinage de la saturation. Elle passe dans l'échangeur E40 et à la sortie de l'échangeur E40, elle est détendue à travers la vanne de détente V40 jusqu'à une pression de $3,9 \times 10^5$ Pa. Elle est alors mélangée avec la phase liquide formée par un mélange liquide équimolaire d'isobutane et d'isopentane arrivant par le conduit 67. Le débit du mélange eau et ammoniac détendu à travers la vanne de détente V40 est de 23,2 Kg/h et le débit du mélange d'isobutane et d'isopentane de 7,9 Kg/h. Le mélange de ces deux phases commence à se vaporiser à 0°C dans l'évaporateur EV4 et finit de se vaporiser à une température de 20°C. La chaleur prélevée sur le fluide extérieur qui arrive par le conduit 84 et repart par le conduit 85 est de 1863 KJ/h. La chaleur qui serait prélevée par suite de la vaporisation de l'ammoniac seul serait de 1264 KJ/h. Le facteur de gain est donc dans ce cas de 1,47. A la sortie de l'évaporateur EV4 on recueille un mélange liquide-vapeur qui est séparé dans le bac de décantation B40. Par le conduit 69 on recueille un débit de 13,2 Kg/h d'une solution contenant 48% en poids de $NH_3$ et par le conduit 73, on envoie à la zone d'absorption un débit de 17,9 Kg/h formé par le mélange d'isobutane, d'isopentane et d'ammoniac entraînant environ 1% d'eau, en phase vapeur.

Les conditions de fonctionnement présentées dans l'exemple selon l'invention, ne doivent pas être considérées comme limitatives.

D'autres couples que l'eau et l'ammoniac ou l'eau et le bromure de lithium peuvent être considérés.

Le fluide (F) peut être également un hydrocarbure tel que propane, butane, pentane ou un hydrocarbure halogéné tel que le difluorochlorométhane (R-22) ou le difluorodichlorométhane (R-12) ou encore un alcool tel que le méthanol.

Le solvant (S) peut être dans ce cas un solvant organique tel que la diméthylformamide, le diméthylsulfoxyde, la N-méthylpyrrolidone, le tétraéthylène glycol, l'alcool benzylique ou encore un hydrocarbure. Il peut être également un produit de synthèse utilisé comme lubrifiant tel que par exemple les lubrifiants de faible viscosité à base d'alkylphényles ou de polyoléfines.

Différentes variantes pourront être envisagées dans l'agencement, par exemple concernant la disposition des échangeurs internes de récupération de chaleur sans modifier le principe du procédé selon l'invention.

Le procédé peut être conçu à des échelles de puissance très variables, allant par exemple pour la puissance frigorifique fournie à l'évaporateur de quelques centaines de W à quelques MW.

Des équipements très divers peuvent donc être utilisés pour réaliser le procédé.

Les échangeurs peuvent être par exemple des échangeurs à tubes et calandre ou des échangeurs à plaques.

Les étapes d'absorption et de désorption sont menées de préférence dans des colonnes du type de celles qui sont le plus fréquemment utilisées en génie chimique pour mener ce genre d'opérations, comportant des plateaux ou des garnissages mais d'autres dispositifs, en particulier des dispositifs comportant une agitation mécanique, peuvent être utilisés.

Les mélanges effectués entre une phase gazeuse et une phase liquide peuvent être réalisés soit par simple mélange en ligne, soit dans un mélangeur statique comportant une hélice ou un garnissage, soit dans une enceinte comportant une agitation mécanique, soit encore dans une zone de contact du type à ruissellement, à plateaux ou à garnissage. Lesdits mélanges et la fourniture de chaleur par condensation ou absorption au moins partielles peuvent être opérés soit successivement, la zone de mélange étant distincte de l'échangeur dans lequel la chaleur est fournie à l'extérieur, soit simultanément, par exemple en réalisant le mélange dans un ballon pourvu d'un échangeur de refroidissement.

La température d'évaporation du mélange des fluides (F) et (H) dans l'évaporateur peut se situer par exemple dans une gamme de température allant de −40 à +80°C.

La température de condensation peut se situer par exemple dans une gamme de température allant de +20 à +120°C.

La température de chauffage du générateur de la zone de désorption peut se situer par exemple dans une gamme de température allant de 130 à 250°C.

La pression maximum de fonctionnement du dispositif est en général inférieure à 50 bar.

La vaporisation du mélange des fluides (F) et (H) peut être également réalisée dans plusieurs zones d'échange successives. Par exemple, si l'installation fonctionne en pompe à chaleur à absorption dont le générateur est alimenté en chaleur par une combustion, l'évaporation pourra débuter dans un premier échangeur dans lequel la chaleur est prélevée par exemple sur de l'air extérieur et se poursuivre dans un second échangeur dans lequel la chaleur est prélevée sur les fumées issues de la combustion qui perment d'alimenter en chaleur le générateur.

Dans un tel cas, il est particulièrement avantageux d'opérer dans des conditions telles que les fluides (F) et (H) sont vaporisés simultanément dans le premier évaporateur à une température sensiblement constante en prélevant de la chaleur par exemple sur l'air extérieur ou sur l'eau d'une nappe phréatique, le fluide (F) étant entièrement vaporisé à la sortie du premier évaporateur. La vaporisation du fluide (H) est alors poursuivie dans le deuxieme évaporateur à une température qui croit progressivement au fur et à mesure de l'augmentation de la pression partielle du fluide (H), jusqu'à une température de sortie compatible avec le chauffage par les fumées provenant du générateur qui arrivent à une température largement supérieure à la température de l'air extérieur. Il est avantageux d'opérer avec une température à la sortie du deuxième évaporateur aussi élevée que possible, ce qui permet d'augmenter le débit de fluide (H) et d'améliorer le facteur de gain.

Dans ce but, si le deuxième évaporateur est constitué par une batterie de tubes à ailettes, il est avantageux de réaliser cette batterie en plusieurs nappes parallèles comportant des ailettes distinctes, de disposer ces nappes en série et de faire circuler le mélange des fluides (F) et (H) à contre-courant du débit de fumées.

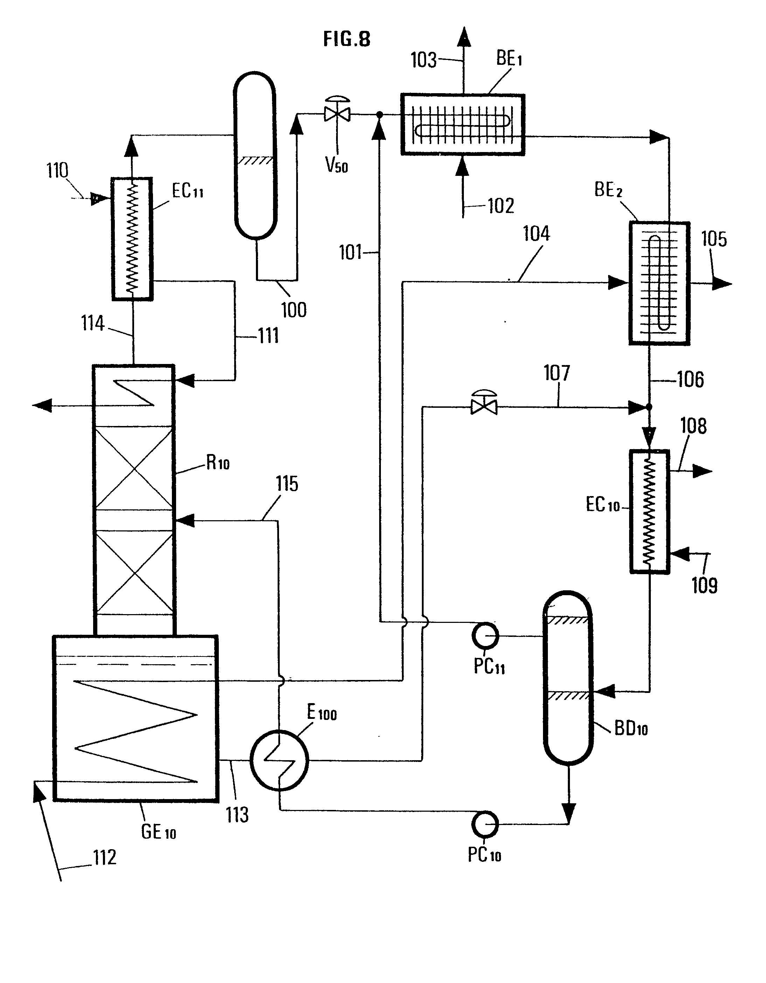

Une telle disposition est illustrée par l'exemple 4, décrit en référence à la figure 8.

Exemple 4
(comparatif)

Dans cet exemple, le fluide (F) est de l'ammoniac, le fluide (S) de l'eau et le fluide (H) de l'isopentane.

Par le conduit 100, on envoie 116 kg/h d'ammoniac qui est détendu à travers la vanne V50 et mélangé avec 250 kg/h d'isopentane arrivant par le conduit101. Le mélange d'ammoniac et d'isopentane est envoyé dans la batterie d'échange de chaleur BE1 dans laquelle ce mélange est partiellement vaporisé par échange de chaleur avec de l'air qui arrive par le conduit 102 à 5°C et repart par le conduit 103 à 0°C. La chaleur ainsi prélevée sur l'air représente 31 410 Kcal/h. Le mélange d'ammoniac et d'isopentane est ensuite envoyé dans la betterie d'échange BE2 dans laquelle l'isopentane continue à se vaporiser en échangeant de la chaleur avec les fumées provenant par le conduit 104 du générateur à une température de 250°C et ressortent par le conduit 105 à une température de 15°C. La chaleur ainsi prélevée sur les fumées représente 15 764 Kcal/h. Le mélange d'ammoniac et d'isopentane qui sort de la batterie d'échange BE2 par le conduit 106 est mélangé avec la solution pauvre arrivant par le conduit 107. Dans l'échangeur EC10 le mélange ainsi obtenu est refroidi jusqu'à 50°C avec de l'eau qui arrive à 35°C par le conduit 109 et repart à 45°C le conduit 108.

Le mélange des deux phases liquides obtenu décante dans le ballon de décantation BD10. La phase isopentane est reprise par la pompe PC11 et la phase aqueuse par la pompe PC10 qui l'envoie par le conduit 115 en un point intermédiaire de la colonne de rectification R10. Cette colonne comporte à sa base un générateur de vapeur GE10 dans lequel la solution d'ammoniac est chauffée par des gaz chauds arrivant par le conduit 112 et repartant par le conduit 104. Par le conduit 113 on évacue la solution pauvre qui représente un débit de 365 kg/h et qui échange de la chaleur avec la solution riche dans l'échangeur E10. En tête de la colonne de rectification R10, on évacue l'ammoniac en phase vapeur qui est condensé dans l'échangeur EC11 en étant refroidi par un débit d'eau qui arrive par le conduit 110 et repart par le conduit 111.

Dans l'exemple 3 qui précède, lescritères de choix du fluide (H) ont été satisfaits, et les conditions de rapport du débit du fluide (H) au débit de fluide (F) à l'entrée de l'évaporateur ont été respectées.

Enfin, on notera que le solvant (S) mis en jeu dans le procédé de l'invention, peut, comme le fluide (H), être aussi un mélange de composés. En particulier, le solvant (S) peut être constitué par un mélange d'eau et d'un constituant au moins partiellement miscible avec l'eau, comme par exemple un alcool, une cétone, le nitrate de lithium, le thiocyanate de sodium, ou tout autre sel soluble dans l'eau.

**Revendications**

1. Procédé de production de froid et/ou de chaleur selon un cycle à absorption mettant en jeu un fluide de travail (F), un solvant (S) pour ledit fluide de travail, et un fluide auxiliaire (H), dans lequel:

a) On met en contact, dans une étape d'absorption/condensation, une phase liquide de solvant (S) avec une phase gazeuse renfermant à la fois le fluide de travail (F) et le fluide (H), de manière à obtenir une solution du fluide (F) dans le solvant (S) et une phase liquide de fluide (H), la phase liquide de fluide (H) étant au moins en partie immiscible avec la solution du fluide (F) dans le solvant (S) et le fluide (H) étant un fluide vaporisable dans les conditions de l'étape (e) et condensable dans les conditions de l'étape (a), la chaleur d'absorption du fluide (F) dans le solvant (S) et la chaleur de condensation du fluide (H) étant transmises à un fluide extérieur,

b) On sépare la solution de fluide (F) dans le solvant (S) de la phase liquide de fluide (H),

c) On envoie la solution du fluide (F) dans le solvant (S), provenant de l'étape (b), à une étape de désorption et l'on soumet ladite solution à des conditions de désorption, la chaleur de désorption étant fournie par un fluide extérieur, de manière à obtenir une phase liquide appauvrie en fluide (F) et une phase vapeur riche en fluide (F), et on recycle ladite phase liquide appauvrie en fluide (F) é l'étape d'absorption/condensation (a) pour former la phase liquide de solvant (S),

d) On condense une partie au moins de la phase vapeur riche en fluide (F), provenant de l'étape de désorption (c), en fournissant de la chaleur à un fluide extérieur, pour obtenir une phase liquide de condensation,

e) On mélange au moins une partie de la phase liquide de condensation, obtenue à l'étape (d), avec au moins une partie de la phase liquide du fluide (H), provenant de l'étape (b), et on vaporise une partie au moins du mélange ainsi obtenue en prélevant de la chaleur sur un fluide extérieur, les conditions opératoires étant choisies de manière à permettre la vaporisation d'une partie au moins du fluide (F) et d'une partie au moins du fluide (H), et

f) on recycle la phase gazeuse ainsi obtenue à l'étape (a),

ledit procédé étant caractérisé en ce que le fluide (H) est un mélange d'au moins deux constituants de volatilité différente, dont les températures d'ébullition diffèrent d'au moins 10°C, ledit fluide (H) étant sélectionné de manière à ce que la variation maximale de sa tension de vapeur soit comprise entre 40 et 80% de la tension de vapeur minimale du fluide (F) et le rapport du débit molaire de fluide (H) au débit molaire de fluide (F) étant fixé à une valeur comprise entre 80% et 150% de la valeur du rapport de la tension de vapeur du fluide (H) à la sortie de l'étape de vaporisation (a) sur la tension de vapeur du fluide (F) à l'entrée de l'étape de vaporisation, lesdits débits molaires de fluide (H) et de fluide (F) étant déterminés à l'entrée de l'étape de vaporisation.

2. Procédé selon la revendication 1, dans lequel, au cours de l'étape d'absorption/condensation (a), on réalise un contact à contre-courant entre la phase gazeuse renfermant à la fois le fluide (F) et le fluide (H), provenant de l'étape de vaporisation (e), et deux phases liquides (L1) et (L2) définies ci-après, dans une zone de contact verticale, on recueille en tête de cette zone de contact une phase vapeur, on mélange ladite phase vapeur avec la phase liquide de solvant provenant de l'étape de désorption (c), on refroidit le mélange ainsi obtenu en fournissant de la chaleur à un fluide extérieur, et en obtenant deux phases liquides (L1) et (L2) constituées respectivement par le fluide (H) et la solution de (F) dans (S), on envoie le mélange refroidi en tête de la zone de contact, pour y constituer les phases liquides (L1) et (L2), et on recueille en fond de la zone de contact deux phases liquides constituées respectivement par la phase liquide de fluide (L1) et la solution enrichie (L2) de fluide (F) dans le solvant (S) que l'on envoie à l'étape (b).

3. Procédé selon l'une des revendications 1 et 2, dans lequel le fluide (F) est de l'ammoniac et le solvant (S) de l'eau.

4. Procédé selon l'une des revendications 1 et 2, dans lequel le fluide (F) est l'eau et le solvant (S) une solution concentrée de bromure de lithium.

5. Procédé selon l'une des revendications 1 à 4, dans lequel le fluide (H) est un mélange contenant au moins un hydrocarbure.

6. Procédé selon l'une des revendications 1 à 4, dans lequel un des constituants du fluide (H) est un hydrocarbure halogéné.

7. Procédé selon la revendication 1, dans lequel le circuit parcouru par le fluide (H) comporte deux réserves de fluide (H) en phase liquide dont les conditions de température et de pression sont adaptées de manière à obtenir des compositions différentes et variables du fluide (H) dans ces deux réserves.

8. Procédé selon l'une des revendications 1 à 6, dans lequel la phase vapeur riche en fluide (F), obtenue au cours de l'étape de désorption (c) par chauffage à l'aide d'un fluide extérieur, est rectifiée par contact à contre courant avec une fraction liquide prélevée sur la phase liquide obtenue à la sortie de l'étape de condensation (d).

9. Procédé selon l'une des revendications 1 à 6, dans lequel la phase liquide condensée au cours de l'étape de condensation (d) est un mélange de fluide (F) et de solvant (S) et ce mélange n'est que partiellement vaporisé au cours de l'étape de vaporisation (e), la phase vapeur obtenue étant envoyée en mélange avec la fluide (H) en phase gazeuse à l'étape d'absorption (a) et la phase liquide étant divisée en deux fractions dont l'une est mélangée avec la phase vapeur provenant de l'étape de désorption (c), le mélange liquide-vapeur ainsi obtenu étant envoyé à l'étape de condensation (d), et dont l'autre est utilisée pour rectifier la phase vapeur générée au cours de l'étape de désorption (c) par chauffage à l'aide d'un fluide extérieur.

10. Procédé selon l'une des revendications 1 à 8, dans lequel le rapport de la tension de vapeur du fluide (H) à celle du fluide (F) est compris entre 0,1 : 1 et 3 : 1.

11. Procédé selon l'une des revendications 1 à 10, dans lequel la vaporisation du fluide (F) est réalisée en totalité dans un premier évaporateur et la vaporisation du fluide (H), commencée dans ledit premier évaporateur, est poursuivie dans un second évaporateur.

12. Procédé selon l'une des revendications 1 à 11, pour la production de chaleur dans lequel la chaleur de désorption est fournie par une combustion, la vaporisation du mélange des fluides (F) et (H) débute dans un premier évaporateur, la chaleur étant prélevée sur d'air extérieur, et la vaporisation est poursuivie dans un second évaporateur dans lequel la chaleur est prélevée sur les fumées issues dans la combustion qui permet d'alimenter en chaleur la désorption.

**Patentansprüche**

1. Verfahren zur Gewinnung von Kälte und/oder Wärme mittels eines Absorptionskreislaufes, wobei man eine Arbeitsflüssigkeit (F), ein Lösungsmittel (S) für diese Arbeitsflüssigkeit und eine Hilfsflüssigkeit (H) einsetzt, wobei folgende Stufen ablaufen:

a) man bringt in einer Stufe der Absorption/ Kondensation eine flüssige Lösungsmittelphase (S) mit einer Gasphase in Kontakt, welche gleichzeitig die Arbeitsflüssigkeit (F) und die Flüssigkeit (H) enthält, so daß man eine Lösung der Flüssigkeit (F) in dem Lösungsmittel (S) und eine flüssige Phase der Flüssigkeit (H) erhält, wobei die flüssige Phase der Flüssigkeit (H) mindestens teilweise mit der Lösung der Flüssigkeit (F) im Lösungsmittel (S) nicht mischbar ist und die Flüssigkeit (H) eine unter den Bedingungen der Stufe (e) verdampfbare und unter den Bedingungen der Stufe (a) kondensierbare Flüssigkeit ist und wobei die Absorptionswärme der Flüssigkeit (F) im Lösungsmittel (S) und die Kondensationswärme der Flüssigkeit (H) auf eine Außenflüssigkeit übertragen werden,

b) man trennt die Lösung der Flüssigkeit (F) im Lösungsmittel (S) von der flüssigen Phase der Flüssigkeit (H),

c) man leitet die Lösung der Flüssigkeit (F) im Lösungsmittel (S) aus der Stufe (b) in eine Stufe der Desorption und unterwirft diese Lösung den Bedingungen der Desorption, wobei die Desorptionswärme durch eine Außenflüssigkeit geliefert wird, so daß man eine an Flüssigkeit (F) verarmte flüssige Phase und eine an Flüssigkeit (F) angereicherte Dampfphase erhält, worauf man diese an Flüssigkeit (F) verarmte flüssige Phase im Kreislauf in die Stufe der Absorption/ Kondensation (a) zurückleitet, wo sie die flüssige Phase des Lösungsmittels (S) bildet,

d) man kondensiert mindestens einen Teil der an Flüssigkeit (F) angereicherten Dampfphase aus der Desorptionsstufe (c), wobei die Wärme an eine Außenflüssigkeit abgegeben wird, so daß man eine flüssige Kondensationsphase erhält,

e) man mischt mindestens einen Teil der flüssigen Kondensationsphase aus Stufe (d) mit mindestens einem Teil der flüssigen Phase der Flüssigkeit (H) aus Stufe (b) und man verdampft mindestens einen Teil der auf diese Weise erhaltenen Mischung, wobei die Wärme einer Außenflüssigkeit entnommen wird und die Reaktionsbedingungen so gewählt werden, daß die Verdampfung mindestens eines Teils der Flüssigkeit (F) und mindestens eines Teils der Flüssigkeit (H) gewährleistet ist, und

f) man leitet die auf diese Weise erhaltene Gasphase in die Stufe (a) zurück,

dadurch gekennzeichnet, daß die Flüssigkeit (H) ein Gemisch aus mindestens zwei Bestandteilen verschiedener Flüchtigkeit ist, deren Siedepunkte um mindestens 10°C differieren, wobei die Flüssigkeit (H) so ausgewählt wird, daß die Maximaländerung ihres Dampfdrucks 40 bis 80% des Minimal-Dampfdrucks der Flüssigkeit (F) beträgt und das Molverhältnis von Flüssigkeit (H) zum Molverhältnis der Flüssigkeit (F) auf einen Wert von 80% bis 150% des Verhältnisses von Dampfdruck der Flüssigkeit (H) am Ausgang der Verdampfungsstufe (a) zum Dampfdruck der Flüssigkeit (F) am Eingang der Verdampfungsstufe eingestellt ist, wobei diese Molverhältnisse von Flüssigkeit (H) und Flüssigkeit (F) am Eingang der Verdampfungsstufe bestimmt werden.

2. Verfahren gemäß Anspruch 1, dadurch gekennzeichnet, daß man während der Stufe der Absorption/Kondensation (a) einen Gegenstrom-Kontakt zwischen der Gasphase, welche gleichzeitig die Flüssigkeit (F) und die Flüssigkeit (H) enthält und aus der Verdampfungsstufe (e) stammt, und zwei flüssigen Phasen (L1) und (L2), die im folgenden definiert sind, in einer vertikalen Kontaktzone durchführt, worauf man am oberen Ende dieser Kontaktzone eine Dampfphase isoliert, welche mit der flüssigen Lösungsmittelphase aus der Desorptionsstufe (c) vermischt wird, das auf diese Weise erhaltene Gemisch abkühlt, wobei die Wärme an eine Außenflüssigkeit abgegeben wird und man zwei flüssige Phasen (L1) und (L2) erhält, die aus der Flüssigkeit (H) bzw. der Lösung von (F) in (S) bestehen, das abgekühlte Gemisch zum oberen Ende der Kontaktzone leitet, wo sie die flüssigen Phasen (L1) und (L2) darstellen, und am unteren Ende der Kontaktzone zwei flüssige Phasen isoliert, die aus der flüssigen Phase der Flüssigkeit (L1) bzw. der angereicherten Lösung (L2) der Flüssigkeit (F) im Lösungsmittel (S) bestehen, welche man in die Stufe (b) einleitet.

3. Verfahren gemäß Ansprüchen 1 und 2, dadurch gekennzeichnet, daß die Flüssigkeit (F) Ammoniak ist und das Lösungsmittel (S) Wasser.

4. Verfahren gemäß Ansprüchen 1 und 2, dadurch gekennzeichnet, daß die Flüssigkeit (F) Wasser ist und das Lösungsmittel (S) eine konzentrierte Lösung von Lithiumbromid.

5. Verfahren gemäß Ansprüchen 1 bis 4, dadurch gekennzeichnet, daß die Flüssigkeit (H) eine Mischung ist, welche mindestens einen Kohlenwasserstoff enthält.

6. Verfahren gemäß Ansprüchen 1 bis 4, dadurch gekennzeichnet, daß einer der Bestandteile der Flüssigkeit (H) ein halogenierter Kohlenwasserstoff ist.

7. Verfahren gemäß Anspruch 1, dadurch gekennzeichnet, daß der von der Flüssigkeit (H) durchlaufene Kreislauf zwei Reserven der Flüssigkeit (H) in flüssiger Phase enthält, deren Temperatur- und Druck-Bedingungen so angepaßt sind, daß man verschiedene und variable Zusammensetzungen der Flüssigkeit (H) in diesen zwei Reserven erhält.

8. Verfahren gemäß Ansprüchen 1 bis 6, dadurch gekennzeichnet, daß die an Flüssigkeit (F) angereicherte Dampfphase, die man während der Desorptionsstufe (c) durch Erhitzen mittels einer Außenflüssigkeit erhält, durch Gegenstrom-Kontakt mit einer flüssigen Fraktion rektifiziert wird, welche man der flüssigen Phase am Ausgang der Kondensationsstufe (d) entnimmt.

9. Verfahren gemäß Ansprüchen 1 bis 6, dadurch gekennzeichnet, daß die während der Kondensationsstufe (d) kondensierte flüssige Phase ein Gemisch der Flüssigkeit (F) und des Lösungsmittels (S) ist und daß dieses Gemisch während der Verdampfungsphase (e) nur teilweise verdampft wird, wobei die erhaltene Dampfphase im Gemisch mit der Flüssigkeit (H) als Gasphase in die Absorptionsstufe (a) geleitet wird und man die flüssige Phase in zwei Fraktionen teilt, von denen eine mit der Dampfphase aus der Desorptionsstufe (c) vermischt wird, wobei die auf diese Weise erhaltene Mischung Flüssig/Dampf in die Kondensationsstufe (d) geleitet wird, während der andere Teil zur Rektifizierung der Dampfphase verwendet wird, die in der Desorptionsstufe (c) durch Erhitzen mit einer Außenflüssigkeit gebildet wurde.

10. Verfahren gemäß Anprüchen 1 bis 8, dadurch gekennzeichnet, daß das Verhältnis des Dampfdrucks der Flüssigkeit (H) zu dem der Flüssigkeit (F) 0,1 : 1 bis 3 : 1 beträgt.

11. Verfahren gemäß Ansprüchen 1 bis 10, dadurch gekennzeichnet, daß die Verdampfung der Flüssigkeit (F) insgesamt in einem ersten Verdampfer durchgeführt wird, während die Verdampfung der Flüssigkeit (H) in diesem ersten Verdampfer begonnen und in einem zweiten Verdampfer fortgesetzt wird.

12. Verfahren gemäß Ansprüchen 1 bis 11, zur Gewinnung von Wärme, dadurch gekennzeichnet, daß die Desorptionswärme durch Verbrennung geliefert wird, die Verdampfung des Gemischs der Flüssigkeiten (F) und (H) in einem ersten Verdampfer beginnt, wobei die Wärme aus der Außenluft empfangen wird, und die Verdampfung in einem zweiten Verdampfer fortgesetzt wird, in welchem die Wärme aus dem Rauch empfangen wird, der aus der Verbrennung stammt, wodurch die Desorptionsstufe (c) mit Wärme gespeist wird.

**Claims**

1. Process for producing cold and/or heat according to an absorption cycle operated with a working fluid (F), a solvent (S) for said working fluid and an auxiliary fluid (H), comprising the steps of

(a) contacting, in an absorption/condensation step, a liquid phase of solvent (S) with a gas phase comprising both the working fluid (F) and fluid (H), so as to obtain a solution of the fluid (F) in the solvent (S) and a liquid phase of fluid (H), the liquid phase of fluid (H) being at least partly immiscible with the solution of the fluid (F) in the solvent (S) and the fluid (H) being a fluid which can vaporize in the conditions of step (e) and condense in the conditions of step (a), the absorption heat of the fluid (F) in the solvent (S) and the condensation heat of the fluid (H) being transferred to an external fluid,

(b) separating the solution of fluid (F) in the solvent (S) from the liquid phase of fluid (H),

(c) supplying the solution of fluid (F) in solvent (S), recovered from the step (b), to a desorption step and subjecting said solution to desorption conditions, the desorption heat being supplied by an external fluid, so as to form a liquid phase of decreased content of fluid (F) and a vapor phase of high content of fluid (F), and recycling said liquid phase of decreased content of fluid (F) to the absorption/condensation step (a) to form the liquid phase of solvent (S),

(d) condensing at least a portion of the vapor phase of high content of fluid (F), recovered from the desorption step (c), and delivering heat to an external fluid, to obtain a liquid condensation phase,

(e) admixing at least a portion of the liquid condensation phase, obtained in step (d), with at least a portion of the liquid phase of fluid (H) recovered from step (b), vaporizing at least a portion of the resultant mixture with heat supplied from an external fluid, the operating conditions being so selected as to allow vaporization of at least a portion of the fluid (F) and at least a portion of the fluid (H), and

(f) recycling the resultant gas phase to the step (a), said process being characterized in that the fluid (H) is a mixture of at least two constituents having different volatilities, whose boiling temperatures differ by at least 10°C, said fluid (H) being so selected that the maximum variation of its vapor pressure be comprised between 40 and 80% of the minimum vapor pressure of the fluid (F), and the ratio of the molar feed rate of fluid (H) to the molar feed rate of fluid (F) being between 80 and 150% of the ratio of the vapor pressure of the fluid (H) at the end of the vaporization step (a) to the vapor pressure of the fluid (F) at the beginning of the vaporization step, said molar feed rates of fluid (H) and fluid (F) being determined at the beginning of the vaporization step.

2. A process according to claim 1, wherein, in the absorption/condensation step (a), the gas phase comprising both the fluid (F) and the fluid (H), recovered from the vaporization step (e), is counter-currently contacted with two hereinafter defined liquid phases (L₁) and (L₂), in a vertical contact zone, a vapor phase is recovered at the top of this contact zone, said vapor phase is admixed with the liquid phase of solvent recovered from the desorption step (c), the resultant mixture is cooled with heat transfer to an external fluid and recovery of two liquid phases (L₁) and (L₂) consisting respectively of the fluid (H) and the solution of (F) in (S), the cooled mixture is supplied to the top of the contact zone, to constitute therein the liquid phases (L₁) and (L₂) and two liquid phases are collected at the bottom of the contact zone, consisting respectively of the liquid phase of fluid (L₁) and the enriched solution (L₂) of fluid (F) in the solvent (S) which is supplied to the step (b).

3. A process according to claim 1 or 2 wherein the fluid (F) is ammonia and the solvent (S) is water.

4. A process according to claim 1 or 2, wherein the fluid (F) is water and the solvent (S) is a concentrated lithium bromide solution.

5. A process according to any one of claims 1 to 4, wherein the fluid (H) is a mixture containing at least one hydrocarbon.

6. A process according to any one of claims 1 to 4, wherein one of the constituents of fluid (H) is a halogenated hydrocarbon.

7. A process according to claim 1, wherein the circuit followed by the fluid (H) comprises two storage tanks for the fluid (H) in liquid phase, whose temperature and pressure conditions are adapted to obtain different and variable compositions of the fluid (H) in these storage tanks.

8. A process according to any one of claims 1 to 6, wherein the vapor phase of high fluid (F) content, obtained in the desorption step (c) by heating with an external fluid, is rectified by counter-current with a liquid fraction removed from the liquid phase obtained at the end of the condensation step (d).

9. A process according to any one of claims 1 to 6, wherein the liquid phase condensed in the condensation step (d) is a mixture of fluid (F) and solvent (S) and this mixture is only partly vaporized in the vaporisation step (e), the resultant vapor phase being supplied to the absorption step (a) in admixture with the fluid (H) in gas phase, and the liquid phase being divided into two fractions, one of which is admixed with the vapor phase recovered from the desorption step (c), the resultant liquid-vapor mixture being supplied to the condensation step (d), and the other one is used to rectify the vapor phase generated in the desorption step (c) by heating with an external fluid.

10. A process according to any one of claims 1 to 8, wherein the ratio of the vapor pressure of the fluid (H) to the vapor pressure of the fluid (F) is comprised between 0.1 : 1 and 3 : 1.

11. A process according to any one of claims 1 to 10, wherein the vaporization of the fluid (F) is effected completely in a first evaporator and the vaporization of the fluid (H) begins in said first evaporator and is continued in a second evaporator.

12. A process according to any one of claims 1 to 11, for producing heat, wherein the desorption heat is supplied by combustion, the vaporization of the mixture of fluids (F) and (H) begins in a first evaporator in which heat is received from external air, and the vaporization is continued in a second evaporator in which heat is received from the combustion smokes issued from the combustion which provided heat for the desorption.

0 064 434

**FIG.1**

**FIG.2**

## FIG.3

0 064 434

FIG.4

19

0 064 434

FIG.5

21

FIG.6

FIG.7

**FIG.8**